# EUROPEAN PATENT APPLICATION

(11) **EP 1 250 026 A1**
(43) Date of publication of application: **16.10.2002**
(21) Application number: 01610040.6
(22) Date of filing: 11.04.2001
(51) Int. Cl.: H04R 25/00, H04B 5/00

(54) **Short range data transfer for communication devices**

(71) Applicant: PHONIC EAR, INC., Petaluma, CA 94954-7600 (US)
(72) Inventor: Sandrock, Carl, Petaluma, CA 94954-7600 (US); Strohallen, Gene M., Petaluma, CA 94954-7600 (US)
(74) Representative: Christensen, Mikael T.

(57) **Abstract**

The invention relates to a method for short range transfer of digital data to a communication device by means of a transmitter device, the method comprising the steps of: providing a data sequence, modulate said data sequence according to a modulating scheme capable of reducing the influence of DC bias, magnetically transmitting said modulated data sequence, receiving said magnetically transmitted modulated data sequence, demodulating said modulated data sequence and applying said data sequence to said communication device.

## Description

### FIELD OF THE INVENTION

The present invention relates to short-range wireless communication systems. More particularly, the present invention relates to short-range inductively coupled communication systems and when applied specifically to "in-the-ear" or 'at-the-ear' hearing aids offer a benefit not previously achieved. The communication system is especially directed towards data communication.

### BACKGROUND OF THE INVENTION

One situation towards the invention especially aims is the communication to and from hearing aids, where a particularly important area is the programming of such hearing aids. Another important area is the communication between two hearing aids.

Today the programming of hearing aids is carried out by connecting the hearing aids to the programming equipment by means of wires and afterwards transmitting the data for the hearing aid setting to the hearing aid. The wires are very thin and fragile and are normally connected to the hearing aids and to the programming equipment by means of tiny jacks or connectors. Due to the small dimensions and the inherent fragile construction these wires are difficult to handle and they often break and gives rise to a significant extra cost for the hearing aid professional carrying out the hearing aid programming, besides of course the fact that it gives rise a significant time consumption and irritation. Moreover the wires often tangle with the hearing aid users hair and clothes during the programming session and limits the hearing aid users mobility during the programming session. For this reason such wired connections are not very desirable.

Therefore it has previously been suggested to program a hearing aid by means of a wireless connection. The previously suggested methods and systems have however not shown practical applicability due to significant power consumption and due to a significant failure rate in the data transmission.

Transmission between two hearing aids may be relevant due to a need of adjusting or setting a program of the hearing aids to a identical value during use where the hearing aids carry out an adjustment automatically. If there were no connection there exists a risk of the adjustment not being carried out at the same time in both hearing aids. For the transmission between two hearing aids there have basically not been any available methods so far since the power consumption has been to high to be supported by means of a normal hearing aid power supply. Therefore there is a need for developing a transmission method and device for this purpose.

Generally there are a number of methods available for wireless transmission. These are briefly described in the following.

Short-range wireless communication systems are of significant importance for a variety of applications. Although many applications are quite common, such as the IRDA interface for computers and peripheral devices including printers, pda's etc., a large number of other potential applications also exist including virtually any system employing digital information, have not been exploited due to limitations in existing short range communication systems.

There are four basic wireless communication systems in use today: acoustic, radio frequency, infrared and inductive. Each of these has performance characteristics, and attendant advantages and limitations well known to those skilled in the art. For example acoustic communication is short range, can cover large groups of people and is subject to interference. Radio frequency (or RF) communication in turn is long range and can use many forms of modulation including amplitude modulation (AM) and frequency modulation (FM) for transmitting signals on an RF carrier. Infrared communication is generally limited to short range, line of sight communication and is immune to forms of interference other than light. The cost vs. range vs. fidelity of each method is well known to those skilled in the art. The last noted approach to short-range wireless communication employs inductively coupled, or magnetically coupled, wireless transmission. In particular, this approach has been employed in hearing assistive devices for communication between a belt worn radio and a small hearing aid of the type worn behind the ear (BTE) or in the ear (ITE). In such a hearing assistive application, the belt worn receiver or microphone is coupled via a cord or cable to a loop, which is worn under the clothing of the hearing aid user and encircles the user's neck. The ITE or BTE hearing aid in turn has an inductive pick up loop therein, for example, the inductive loop employed for picking up telephone audio (so called teleloop, T-loop or T-coil), to pick up the audio signal from the neck worn transmission loop. Such systems are described more detailed in US patent no. 5,774,791. One advantage of an inductively coupled system relative to a RF transmission system is that since that such an inductively coupled system operates in the audio frequency range. A further advantage of inductive coupling for short-range communication systems of this type is that low power consumption is associated with the system. Due to the desired small size of the hearing aid, low power consumption is a key requirement since any batteries employed must be of small size and hence limited in power supply capabilities.

These previously known methods and systems all relate to audio communication. When relating to data transmission, such as programming data, mode data etc. these methods and systems will provide some shortcomings. Due to the nature of such data the transmission of these will often give rise to a significant failure rate.

The main objective of the present invention is to provide a data communication method and a data communication system that will eliminate the need for wires, that will operate with a low power consumption at the same time to the best possible extend reduce the failure rate of data retrieval in a device receiving the data signals

### SUMMARY OF THE INVENTION

According to the invention this objective is achieved by means of the method as defined in claim 1.

The failure of transmitting data can be resolved by coding the serial data using various different types of modulation schemes that will reduce the relevance of the DC bias. By doing so the transmission method using inductive coupling provides a reliable and low power transmission of data to and from e.g. a hearing aid. A short range wireless communication system employing DC drifting eliminating Modulation for the purpose of transmitting and receiving data over the H field (magnetic field) of the RF link is defined for short range data communication purpose.

One modulation scheme is represented by the Alternate Mark Inversion (AMI) technique, which represents logic 1 bits as alternating positive and negative pulses and logic 0 bits as the common reference voltage or intermediate voltage. The alternate mark inversion coding determines the duty cycle of the clock. Thus during positive logic bits the clock duty cycle is 80%. During negative logic 1 bits the clock duty cycle is 20%. During logic 0 bits the clock duty cycle is 50%. The transmission clock feeds a class D amplifier that drives the inductive loop antenna. The transitioning positive and negative pulses representing 1's, when integrated through a capacitor, establish a minimal dc offset thereby keeping the low voltage amplifiers and comparators within the range of operation and out of saturation. It is therefore possible to integrate serial data and audio within a conventional TVM circuit and transmit the information over a short range using the H field, or magnetic, field as the wireless method of coupling to the receiver antenna coil of the adjacent receiver element.

This method follows a similar path to producing pilot-tones to send coded signals over a magnetic link (ref pat 5,774,791) whereas the audio pilot tone is modulated, transmitted and received by the receiver element, which in turn amplifies, detects and decodes the tones into a binary word for steering or controlling. The alternate mark inversion modulated signal is transmitted and received by the receiver element which in turn amplifies, detects and decodes the duty cycle into 1's and 0's. The primary difference between the two approaches is in the encoding and decoding of the TVM signal. It becomes necessary, with the advent of programmable hearing aids, to develop a wireless means of communicating with the hearing aid via a wireless link. Especially when the size, and power requirements are severely restricted due to the total volume of the hearing aid that must fit into the ear. The invention of TVM of a magnetic field established a short-range high performance system which has been demonstrated to perform better than the traditional base-band amplitude modulated magnetic field system referred to as the t-coil or teleloop system. With slight modification to the circuit blocks it is possible to send and receive audio and data. The use of such a system employed in a magnetic field establishes a robust communication link between two hearing aids, one worn at the right ear and one worn at the left ear. The near field rule for H field or magnetic fields establishes a predictable field compared with the E field or RF radio transmission. The E and H field represent the components of a RF signal whereby the characteristics of an H field are defined by the antenna coil size, inductance forming the di/dt relationship. Compared with the E field transmission that is defined by the antenna coil resonance forming the de/dt relationship. E field radio transmission paths are not as predictable compared with H field transmission. Therefore the use of a magnetic signal (H field) offers a more robust communication interface a short-distance. The magnetic field is also less vulnerable to outside interference sources compared with base-band magnetic systems or RF systems. This is significant when considering the additional circuits required ensuring that outside interference is minimized in an RF radio system eliminating the need for channelization, special frequencies of operation and additional filtering. Circuit complexities are therefore reduced leading to a significant reduction in power consumption and size. Therefore a short-range receiver can be developed using TVM of a magnetic field consuming less power than traditional RF radios (presently measured at a ratio of 10: 1 of RF to TVM current consumption) and size (20% less area for TVM). It is also necessary that programmable hearing aids have the capability of acknowledging and transmitting back the contents of its data and programming information. The wireless return link can be established using several methods employing the merits of the magnetic link. One approach is to modulate the receiver coil thereby using the same antenna coil for both transmitting and receiving. This approach establishes the system as a half duplex wireless magnetic communication system whereby one device serves as the master unit and is the only device to generate communications with another device (the slave unit). The slave unit cannot generate communications until it has received the proper information and command to transmit from the master unit. A communication protocol is therefore required making it possible for two hearing aids to communicate with each other or for a hearing aid to communicate with a programmer unit. This invention describes a wireless communication system using magnetic coupling and Time Variant Modulation to send and receive audio and/or data between two hearing aids or between hearing aids and a remote programmer for hearing aids. The system architecture and protocol embody the total communication system.

The present invention provides a short-range wireless communication system which consumes very little power and which employs relatively simple and inexpensive circuitry for both the transmission and reception portions of the system. The present invention further provides a short-range wireless communication system, which is not subject to amplitude variation and noise problems related to orientation and distance of the transmission and reception portions of the system. The short-range wireless communication system of the present invention employs Time Variant Modulation (TVM) along with inductive (or magnetic) coupling of a transmission element and a receiving element to achieve the above-noted results. More specifically, the present invention employs transmission of a relatively high repetition rate train of relatively constant amplitude pulses, which are modulated by the audio frequency signal desired to be transmitted. The characteristics of the pulse train, which are modulated by the audio frequency input signal relate to the time domain. For example, the duration of each pulse in the pulse train may be modulated so that it corresponds to the instantaneous magnitude of the audio frequency input signal. The modulated high repetition rate pulse train is provided to the transmission element, which is magnetically coupled to a receiving element. The receiving element is configured in a receiver and at least one of the elements is freely movable relative to the other. For example, the receiver may be configured in a head worn device such as a headset or in-ear receiver, or in a hand held or other portable receiver. The magnetically induced current in the receiving element, which may be a simple loop, drives a pulse detector and demodulator circuit, which decodes the time variant modulated pulses and reproduces the original signal. In a preferred embodiment the transmission or modulating circuitry may employ a relatively straightforward sawtooth wave generator, triangle wave generator or other substantially linear waveform generator. The linear waveform is compared to the audio frequency input signal to generate a time variant modulated pulse train. This pulse train preferably has a pulse frequency (i.e. repetition rate) at least 2.6 times that of the highest frequency in the audio frequency signal to be transmitted, typically 30 kHz for normal audio signals falling below 12 kHz. The high repetition rate modulated pulse train is provided, via a magnetic element driving circuit, to a magnetic transmission element which is of dimensions and configuration adapted for the specific application. For example, a neck worn or belt worn loop may be employed for transmission from a portable transmitter/audio source to a head worn device such as a headset or an ITE or BTE hearing aid. In a fitting situation at a hearing professional the a portable transmitter could receive and send data from and to, respectively, a stationary programming equipment, which usually comprises a personal computer with suitable programming software. The function of the programming equipment is basically not affected by the wireless transmission of data and the hearing professional will therefore form the only experience the lack of wires from the portable device to the communication device, i.e. the headset or the hearing aid.

The receiving or demodulating circuitry may also be relatively simple. For example, in the case of modulation of the pulse train duty cycle, referred to herein as symmetry modulation, a simple RC (resistor and capacitor) circuit may be employed to integrate the pulses to demodulate the time domain modulated pulse train and reproduce the audio signal at the receiver. For application in a head worn device, a very low power amplifier is all that is required to drive a speaker worn in the ear or adjacent the ear of the user. The receiver may thus provide both low cost and lightweight construction with very little power consumption. Demodulated audio will be amplified by the hearing aid. It will be appreciated by those skilled in the art that the present invention, employing modulation in the time domain as opposed to the amplitude domain, avoids the problems associated with amplitude modulated base band magnetic coupled systems related to amplitude sensitivity to orientation and distance between the transmitting and receiving loops. In particular, since all the pulses in the pulse train are of the same magnitude, with only their duration or other time characteristics being modulated in response to the input, variations in coupling efficiency between the transmitting and receiving magnetic elements will not affect the demodulated output signal. Furthermore, the pulse magnitude and/or receiver sensitivity may be chosen so as to provide a desired signal to noise ratio.

It will be appreciated by those skilled in the art that the present invention provides a short range magnetically coupled wireless communication system, which overcomes the above-noted problems in the prior art. Further features and advantages of the system of the present invention will be appreciated by review of the following detailed description of the invention.

### BRIEF DESCRIPTION OF THE DRAWINGS

FIG. 1 depicts an embodiment where two hearing aids are programmed utilizing the invention;
FIG. 2 depicts an embodiment where two hearing aids are communicating data;
FIG. 3 depicts an embodiment where the invention is implemented in a remote control capable of retrieving data from a hearing aid, and
FIG. 4 depicts an embodiment, where the transmitter/receiver coil is used in a charging circuit for a rechargeable battery in a hearing aid;
FIG. 5 depicts different modulation schemes.

### DESCRIPTION OF PREFERRED EMBODIMENTS

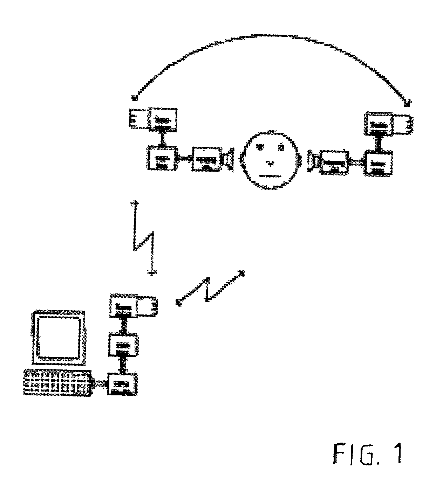

From FIG. 1 a first embodiment of the invention appears where two hearing aids are being programmed by means of a programming device using wireless transmission of the programming data from the programming device to the hearing aids.

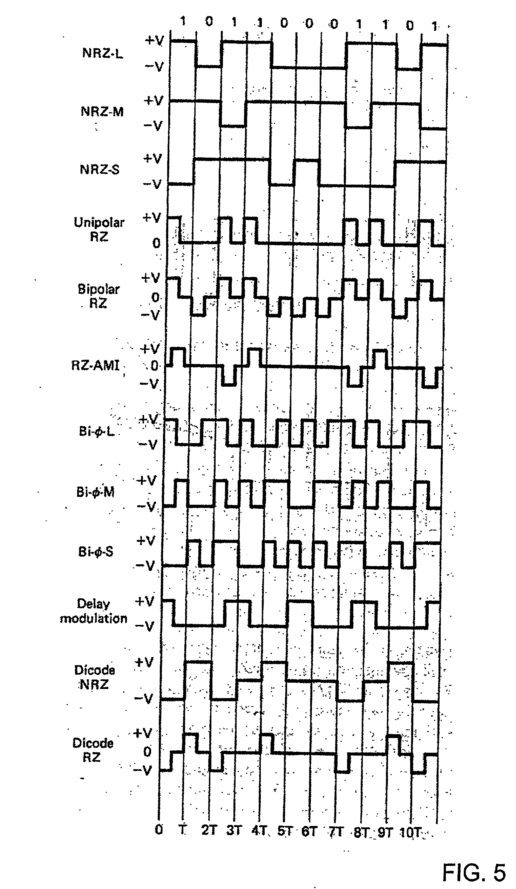

The programming device comprises a transmitter, which according to the invention is adapted for magnetically transmitting a programming data sequence, which has been modulated to reduce DC bias. The modulation will be described more detailed in connection with FIG. 5. The program data are transmitted magnetically via an antenna in the form of a coil or a loop. The program data are afterwards received by antennas, likewise in the form of coils, in the hearing aids. Subsequently the program data sequence is demodulated and the data are stored in the hearing aid as it normally is the case. Both the programming device and the hearing aid are transceivers. Generally the hearing aid would be transmitting acknowledge codes back to the programmer, or request for retransmission if the data is corrupt. It is also possible that the programming system would need to read all the hearing aids registers, so a download function could also be included.

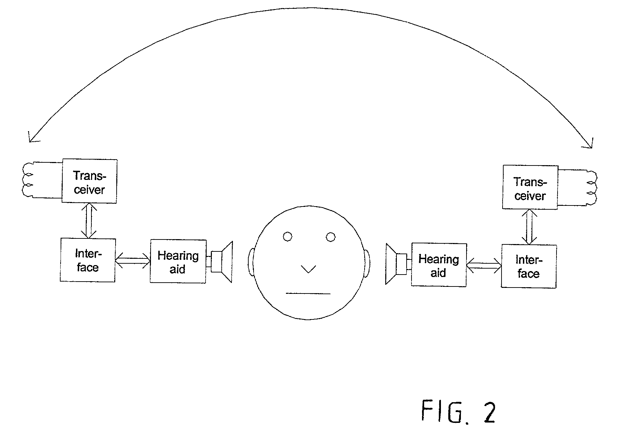

From FIG. 2 a second embodiment of the invention appears, where two hearing aids are provided with transmission and receiving equipment for wireless transmission of data to and from the respective hearing aid. This embodiment is especially relevant where the data processing of the two hearing aids are performed in response to actual environmental conditions, meaning that a variation of the data processing may occur according to the actual conditions. It such situations it is desirous to have the two hearing aids set to perform identically in order not to disturb or confuse the hearing aid user. Situations where data exchange is relevant may for instance occur in adaptive systems for directionality or noise cancellation.

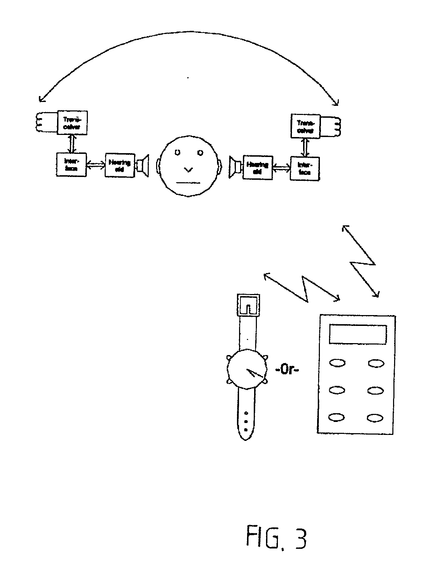

From FIG. 3 a third embodiment of the invention appears where a remote control and a hearing aid are interacting. The remote control is sending control data to the hearing aid(s) as it is the case with many remote controls. In addition to this the remote control unit comprises means for receiving data transmitted from the hearing aid according to a modulation scheme as suggested according to the invention. This serves the purpose of achieving a low power transmission of data from the hearing aid in e.g. a data-collecting situation.

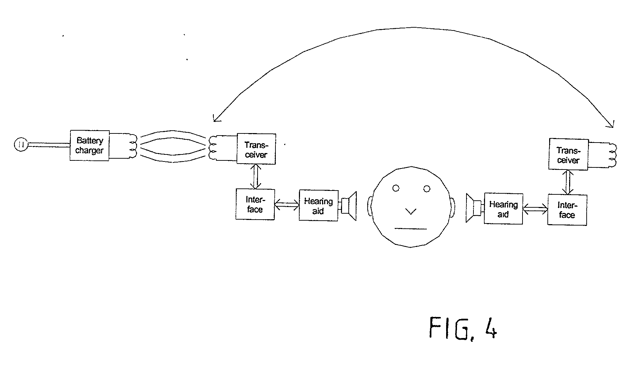

From FIG. 4 appears the use of the antenna coil in a hearing aid for charging purposes of a rechargeable battery. This embodiment is based on the previously discussed systems and serves to achieve the highest synergy effect from the coil antenna used for the data transmission. A hearing aid with a rechargeable battery has several advantages over the normally used batteries. The main advantage is the no longer existing need for changing batteries, which may be difficult for some individuals.

From FIG. 5 different modulation principles appears, which each to a certain degree eliminates the DC bias, that could cause the data transfer to fail due to erroneous data receipt. The first group of modulations is the NRZ group. The second group of modulations is the RZ group. The third group of modulations is the Phase Coded Group.

The NRZ group is probably the most commonly used PCM waveform. It can be divided into a numbers of subgroups: NRZ-L (L for level). NRZ-M (M for mark), and NRZ-S (S for space). NRZ-L is often used in digital logic. A binary one is represented by one level and a binary zero is represented by another level. There is a change in level whenever the data change from a one to a zero or from a zero to a one. With NRZ-M, the one, or mark, is represented by a change in level, and the zero, or space, is represented by no change in level. This is often referred to as differential encoding. NRZ-S is the complement of NRZ-M: A one is represented by no change in level, and a zero is represented by a change in level. The RZ waveforms consist of unipolar-RZ, bipolar-RZ, and RZ-AMI. With unipolar-RZ, a one is represented by a half-bit-wide pulse, and a zero is represented by the absence of a pulse. With bipolar-RZ, the ones and zeros are represented by opposite-level pulses that are one-half-bit wide. There is a pulse present in each bit interval. RZ-AMI (AMI for "alternate mark inversion" ) is the coding scheme most often used in telemetry systems. The ones are represented by equal-amplitude alternating pulses. The zeros are represented by the absence of pulses.

The phase-encoded group consists of bi-phase-Level, better known as Manchester coding; bi-phase-mark; bi-phase-space; and delay modulation (DM), or Miller coding. With bi-φ-L, a one is represented by a half-bit-wide pulse positioned during the first half of the bit interval; a zero is represented by a half-bitwide pulse positioned during the second half of the bit interval. With bi-φ-M, a transition occurs at the beginning of every bit interval. A one is represented by a second transition one-half bit interval later; a zero is represented by no second transition. With bi-φ-S, a transition also occurs at the beginning of every bit interval. A one is represented by no second transition; a zero is represented by a second transition one-half bit interval later. With delay modulation, a one is represented by a transition at the midpoint of the bit interval. A zero is represented by no transition, unless it is followed by another zero. In this case, a transition is placed at the end of the bit interval of the first zero. Many binary waveforms use three levels, instead of two, to encode the binary data. Bipolar RZ and RZ-AMI belong to this group. The group also contains formats called dicode and duobinary. With dicode-NRZ, the one-to-zero or zero-to-one data transition changes the pulse polarity; without a data transition, the zero level is sent. With dicode-RZ, the one-to-zero or zero-to-one transition produces a half-duration polarity change; otherwise, a zero level is sent.
DC component: Eliminating the dc energy from the signal's power spectrum enables the system to be ac coupled. Magnetic recording systems, or systems using transformer coupling, have little sensitivity to very low frequency signal components. Thus low-frequency information could be lost.
Self-Clocking: Symbol or bit synchronization is required for any digital communication system. Some PCM coding schemes have inherent synchronizing or clocking features that aid in the recovery of the clock signal. For example, the Manchester code has a transition in the middle of every bit interval whether a one or a zero is being sent. This guaranteed transition provides a clocking signal.
Error detection: Some schemes, such as duobinary, provide the means of detecting data errors without introducing additional error-detection bits into the data sequence.
Bandwidth compression: Some schemes, such as multilevel codes, increase the efficiency of bandwidth utilization by allowing a reduction in required bandwidth for a given data rate; thus there is more information transmitted per unit bandwidth

## Claims

1. A method for short range transfer of digital data to a communication device by means of a transmitter device, the method comprising the steps of: providing a data sequence, modulate said data sequence according to a modulating scheme capable of reducing the influence of DC bias, magnetically transmitting said modulated data sequence, receiving said magnetically transmitted modulated data sequence, demodulating said modulated data sequence and applying said data sequence to said communication device.

2. A method according to claim 1, wherein a check data signal is transmitted from the communication device to the transmitter device.

3. A method according to claim 2, wherein the check signal is transmitted after having completed the transmission of the data sequence.

4. A method according to claim 1, wherein a pulse code modulation scheme in the form of an NRZ modulation scheme, a RZ modulation scheme or a Phase Encoded modulation scheme is used.

5. A programming system comprising a programming unit and a programmable communication device, the programming unit comprising modulating means to provide a modulated programming signal according to a modulating scheme capable of reducing the influence of DC bias, a magnetic transmitting means adapted to transmit the modulated programming signal, the programmable communication device comprising a receiver for receiving the magnetically transmitted pulse width modulated programming signal, demodulating means for demodulating the modulated programming signal to provide a programming signal and storing means for storing the programming signal.

6. A programming system according to claim 5, where the programmable communication device comprises means for transmitting a check signal back to the programming unit.

7. A programming system according to claim 6, wherein the means in the programmable device for communicating with the programming unit comprise magnetic transmitting means.

8. A programming system according to claim 6 or 7, wherein the modulation means are adapted to form a pulse code modulation scheme in the form of an NRZ modulation scheme, a RZ modulation scheme or a Phase Encoded modulation scheme.

9. A programmable communication device for use in a system according to any of the claims 6-8, wherein the device comprises a receiver for receiving the magnetically transmitted modulated programming signal, demodulating means for demodulating the modulated programming signal to provide a programming signal and storing means for storing the programming signal.

10. A programmable communication device according to claim 7, where the means for receiving the programming signal comprises a coil capable of receiving a magnetically transmitted signal.

11. A programmable communication device according to claim 10, where the communication device comprises a rechargeable battery and charging circuitry for controlling charging of the rechargeable battery in response to an external magnetic field received by the coil.

12. A programmable communication device according to claim 10, wherein at least one transmitting means is provided for transmitting a signal back to the programming unit of the programming system, where the signal may be a check signal, the entire hearing aid memory or sampled acoustic or environmental data could be downloaded.

13. A programming system according to claim 6, wherein the magnetic transmitting means is provided as a loop or a belt for mounting in the vicinity of the programmable device.

14. A programming unit for use in a system as described in any of the claims 6-8, wherein the programming unit comprises modulating means to provide a pulse width modulated programming signal according to a modulating scheme capable of reducing the influence of DC bias, a magnetic transmitting means adapted to transmit the pulse width modulated programming signal.

15. A hearing aid system comprising a first and a second hearing aid, the first hearing aid comprising modulating means to provide a pulse width modulated data signal according to a modulating scheme capable of reducing the influence of DC bias, a magnetic transmitting means adapted to transmit the pulse width modulated data signal, the second hearing aid comprising a receiver for receiving the magnetically transmitted pulse width modulated data signal, demodulating means for demodulating the pulse width modulated data signal to provide a data signal and storing means for storing the data signal.

16. A hearing aid system according to claim 15, wherein the modulation means are capable of forming a pulse code modulation scheme in the form of an NRZ modulation scheme, a RZ modulation scheme or a Phase Encoded modulation scheme.

17. A hearing aid system comprising remote control unit and a communication device, wherein the remote control comprises modulating means to provide a pulse width modulated control signal according to a modulating scheme capable of reducing the influence of DC bias, a magnetic transmitting means adapted to transmit the modulated control signal, the programmable communication device comprising a receiver for receiving the magnetically transmitted modulated control signal, wherein the communication device comprises a receiver for receiving the magnetically transmitted modulated control signal, demodulating means for demodulating the modulated control signal to provide a control signal, where the communication device comprises at least one transmitting means for transmitting a data signal back to the remote control, where the remote control unit comprises means for receiving the data signal transmitted from the communication device as well as means for storing the data transmitted.

18. A hearing aid system according to claim 17, wherein the modulation means are capable of forming a pulse code modulation scheme in the form of an NRZ modulation scheme, a RZ modulation scheme or a Phase Encoded modulation scheme.

19. A remote control for use in a system according to claim 17, wherein the remote control comprises modulating means to provide a pulse code modulated control signal according to a modulating scheme capable of reducing the influence of DC bias, a magnetic transmitting means adapted to transmit the pulse width modulated control signal and where the remote control unit comprises means for receiving data signal transmitted from a communication device as well as means for storing the data transmitted.
